# EUROPEAN PATENT SPECIFICATION

(11) **EP 4 267 684 B1**
(45) Date of publication and mention of the grant of the patent: **19.02.2025**
(21) Application number: 21843992.5
(22) Date of filing: 22.12.2021
(51) Int. Cl.: C09D 5/00, C09D 5/34, C09D 5/02

(54) **PUTTY COMPOSITION FOR WIND TURBINE BLADES**
KITTZUSAMMENSETZUNG FÜR WINDTURBINENSCHAUFELN
COMPOSITION DE MASTIC POUR PALES D'ÉOLIENNE

(30) Priority: 23.12.2020 EP 20217122
(43) Date of publication of application: 01.11.2023
(73) Proprietor: Hempel A/S, 2800 Kongens Lyngby (DK)
(72) Inventor: MURCIA, Diana, Carolina, Figueroa, 2800 Kgs. Lyngby (DK); BERNAD, Pablo, Luis, 2800 Kgs. Lyngby (DK)
(74) Representative: Aera A/S
(86) International application number: PCT/EP2021/087311
(87) International publication number: WO 2022/136554

(56) References cited:
- WO-A1-2006/066030
- CN-A- 102 250 505
- CN-A- 102 675 949
- CN-A- 107 829 406
- CN-A- 108 331 279
- JP-A- 2016 204 618
- KR-A- 20190 043 407
- KR-A- 20190 043 409

## Description

### FIELD OF THE INVENTION

The present invention relates to a putty composition suitable for application on substrates such as wind turbine blades. The invention also relates to a substrate having on at least a part of the outer surface a putty layer obtained from a putty composition of the invention and to a method for application of the putty composition of the invention to a substrate.

### BACKGROUND OF THE INVENTION

In recent years, wind energy has become an important source of electricity production, and contributes significantly to reducing CO₂ emissions. Wind power is the use of air flow through wind turbines to provide the mechanical power to turn electric generators.

Wind turbines typically have an upwind rotor with three blades, attached to a nacelle on top of a tall tubular tower. Wind turbine blades, or "wind blades" are usually designed to last around 20 to 25 years. The blades are constantly exposed to the elements and are ideally designed to endure temperature extremes, wind shears, precipitation, and/or other environmental hazards with minimal failure. Coating failure due to erosion is often observed especially on the leading edge of the blade. Rain, hail, ice, UV, water absorption and other weather conditions erode the leading edge of the blade. This affects the aerodynamic of the blade and could cause severe damages.

Typically wind turbine blades are coated with a multi-layer system comprising a primer and an erosion protecting topcoat, and on the leading edge supplemented with a suitable leading edge protective coating for further erosion protection.

Underneath the coating, a putty composition is usually used to smoothen or cover parts of the wind blade surface that are irregular, or include cracks and recesses. These could for example be sections of the wind blade where various individual components are joined during construction. A putty composition can also be used for covering sections of the wind blade that have been damaged, for example by erosion. Such sections also show surface unevenness and irregularities, which makes them sensitive to further erosion. Sections of a wind blade surface that include edges, corners or recesses, offer points of attack for erosive forces and are therefore very sensitive to erosion. The putty composition must provide a smooth and uniform surface that can suitably be overcoated with a coating system. To obtain a smooth surface, the cured putty layer must be sanded before overcoating. A fast curing time is desirable as it will reduce the time from application to sanding. At the same time it is important to maintain a proper strength and flexibility of the cured putty layer.

Polyurethane putty compositions for wind blades are known in the art. WO 2017/207521 and WO 2017/207523 both discloses two-component polyurethane putties for wind blades comprising a mixture of polyols in the base composition and a curing agent comprising polyisocyanate.

A polyurea putty composition for wind blade repair comprising 30-50% polyaspartic ester amine cured with a mixture of polyisocyanates has been disclosed in CN102250505.

### SUMMARY OF THE INVENTION

The present invention provides a putty composition suitable for wind blades that provides a fast development of hardness and thus allows to be mechanically sanded in a short period of time after application. Accordingly, the present invention relates to a putty composition comprising
a) a base composition comprising
   i) one or more amino functional resin comprising one or more polyaspartic ester and/or one or more polyetheraspartic ester, and
   ii) one or more hydroxy functional resin comprising one or more hydroxy functional polymer and/or one or more castor oil based polyol;
   and
   wherein
   the one or more hydroxy functional resin ii) constitutes 1-10 parts (weight) relative to 1 part (weight) of the one or more amino functional resin i), such as 1-9 parts such as 1.5-9 parts such as 2-9 parts, or 1-8 parts such as 1.5-8 parts such as 2-8 parts, or 1-7 parts such as 1.5-7 parts such as 2-7 parts, or 1-6 parts such as 1.5-6 parts such as 2-6 parts, or 1-5 parts preferably 1.5-5 parts such as 2-5 parts, or 1-4 parts such as 1.5-4 parts such as 2-4 parts, or 1-3 parts such as 1.5-3 parts such as 2-3 parts (weight) relative to 1 part (weight) of the one or more amino functional resin i).

In one embodiment, the invention relates to the use of a putty composition according to the invention, for application on the outer surface of a substrate.

In one embodiment, the invention relates to a kit of parts comprising,
A) a first container comprising a) a base composition comprising
   i) one or more amino functional resin comprising one or more polyaspartic ester and/or one or more polyetheraspartic ester, and
   ii) one or more hydroxy functional resin comprising one or more hydroxy functional polymer and/or one or more castor oil based polyol;
      and
B) a second container comprising b) a curing agent comprising one or more polyisocyanates.

In one embodiment, the invention relates to a substrate, such as a wind blade having on at least a part of the outer surface thereof, a putty layer obtained from a putty composition according to the invention.

### FIGURES

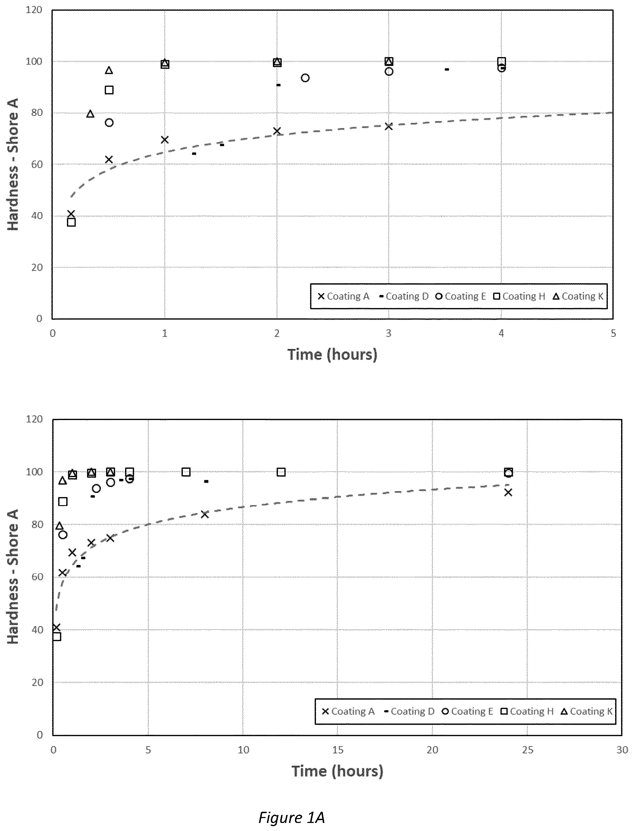

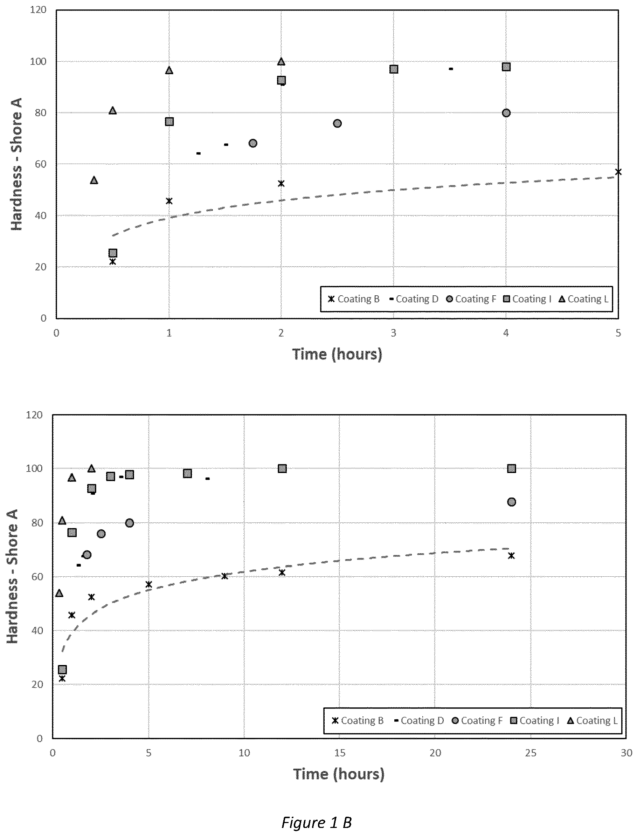

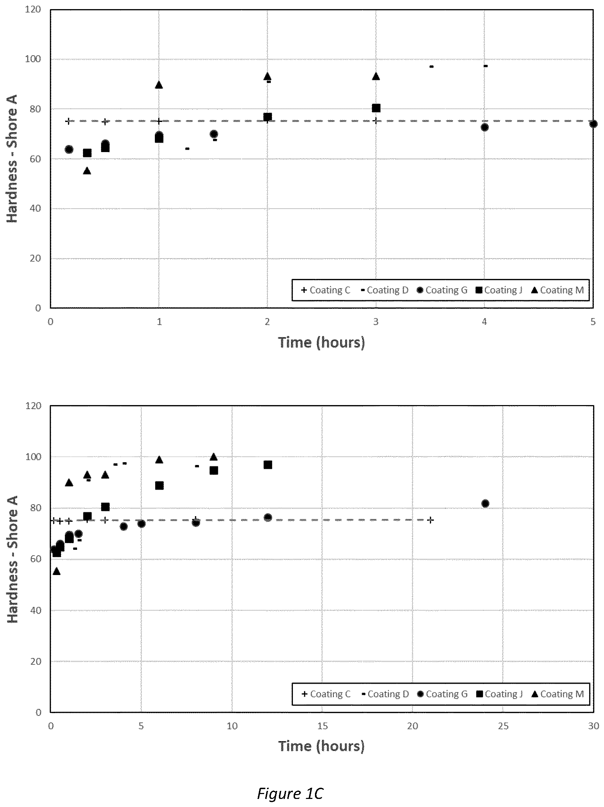

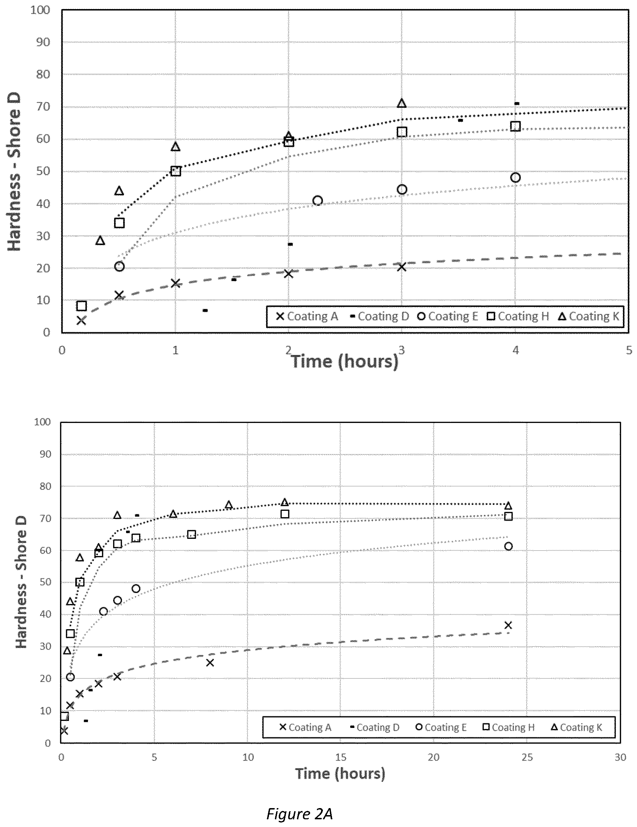

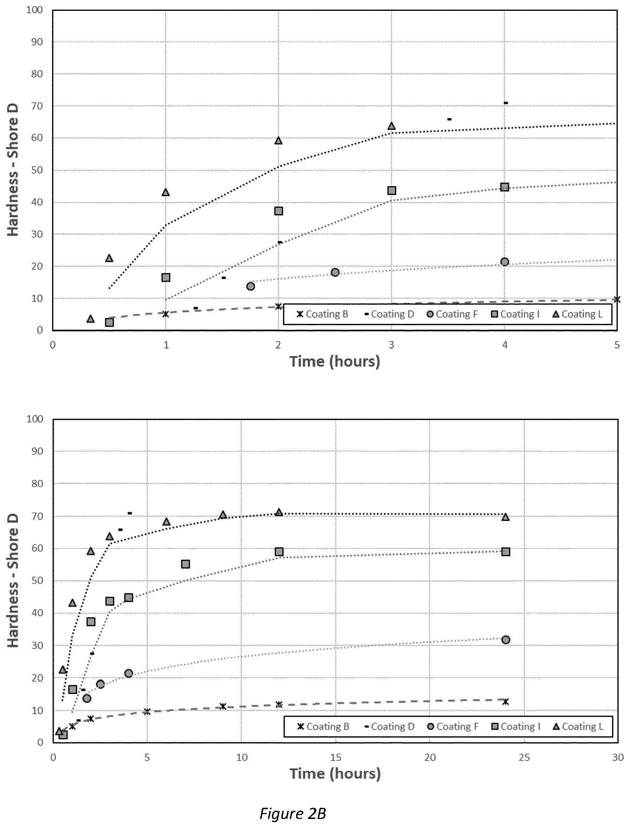

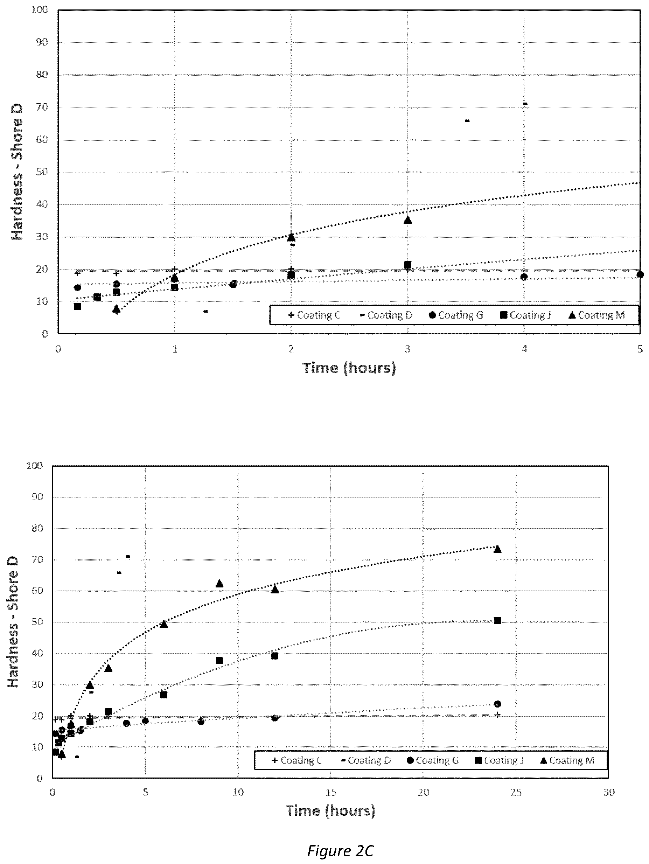

Figures 1 and 2 illustrate the hardness obtained over time by the exemplified compositions. X-axis: time (h), Y-axis: hardness (Shore A and D scales). A 6 mm layer of each of the exemplified compositions were prepared and the hardness is measured according to ASTM D2240 with a durometer over time. The dashed lines correspond to the best fit regression curve of the experimental data (when fitting was possible). Hardness is depicted over a 5 hour and a 24 hour period.
Figure 1 Results of hardness. Y-axis: hardness (Shore A), X-axis: time (hours).
Fig. 1A: samples prepared with Setathane D 1145; Fig. 1B: samples prepared with Setathane D1150;
Fig. 1C: samples prepared with Capa^{®} 2043.
Figure 2 Results of hardness. Y-axis: hardness (Shore D), X-axis: time (hours).
Fig. 2A: samples prepared with Setathane D 1145; Fig. 2B: samples prepared with Setathane D1150;
Fig. 2C: samples prepared with Capa^{®} 2043.

### DETAILED DESCRIPTION OF THE INVENTION

The present invention relates to a putty composition for wind turbine blades. The putty composition comprises a binder system based on the combination of an aminofunctional resin comprising a polyaspartic and/or polyetheraspartic ester and; a hydroxy functional resin comprising one or more hydroxy functional polymer and/or one or more castor oil based polyol. The inventors have found that by having this combination a rapid hardness can be obtained which decreases the time required to sand the putty surface. The putty develops superior hardness over time compared to conventional polyurethane formulations.

Accordingly, the invention relates to a putty composition comprising a) a base composition comprising i) one or more amino functional resin comprising one or more polyaspartic ester or one or more polyetheraspartic ester or mixtures thereof, and ii) one or more hydroxy functional resin and b) a curing agent comprising one or more polyisocyanates.

The inventors found that the time for development of hardness of the putty layer when applied on a substrate can be regulated by adjustment of the weight ratio between i) and ii). Thus, in a preferred embodiment, the one or more hydroxy functional resin ii) constitutes 1-10 parts (weight) relative to 1 part (weight) of the one or more amino functional resin i), such as 1-9 parts such as 1.5-9 parts such as 2-9 parts, or 1-8 parts such as 1.5-8 parts such as 2-8 parts, or 1-7 parts such as 1.5-7 parts such as 2-7 parts, or 1-6 parts such as 1.5-6 parts such as 2-6 parts, or 1-5 parts most preferably 1.5-5 parts such as 2-5 parts, or 1-4 parts such as 1.5-4 parts such as 2-4 parts, or 1-3 parts such as 1.5-3 parts such as 2-3 parts (weight) relative to 1 part (weight) of the one or more amino functional resin i). Having a polyaspartic ester as the sole binder did not provide a successful putty composition since the material maintained a soft inner core although the surface seemed hard enough to sand.

The term "putty composition" as used in the present invention refers to a composition that is sufficiently dense or viscous enough to fill defects in the surface of the article, when applied by a spatula or putty knife. When the term "putty" (without "composition") or "putty layer" is used in the present context it typically refers to the putty after application onto the surface of a substrate. The viscosity of a putty composition is significantly higher than the viscosity of a conventional coating composition (for example primer, topcoat composition and Leading Edge Protective coating composition). Viscosities have been measured on part a) and part b) of exemplified compositions. typically, the viscosities are typically in the range of 500.000-2.500.000 cP, such as in the range of preferably in the range of 800.000-2.000.000 cP with respect to part a) and in the range of 500-5.000 cP, preferably in the range of 700-3000 cP with respect to part b) In a preferred embodiment, the putty composition according to the invention has a viscosity making it suitable for application onto the surface with a spatula or putty knife to fill gaps and irregularities on the surface of a substrate. Additionally, the putty should have a sag resistance making it suitable to be applied in a single layer of e.g. 4 to 7mm. A putty composition according to the invention cannot be applied by conventional application methods known for coating compositions such as by brush, roller or airless spray.

The putty composition of the invention may be applied to various substrates. The substrate may be made of a single material such as for example metal or plastic or it may be composed of various materials. In a preferred embodiment, the substrate is a fiber-reinforced plastic substrate such as an epoxy resin-based plastic substrate. Suitable fibers for reinforcement are glass fiber, aramid fiber and/or carbon fiber, or natural fibers such as hemp or sisal. The substrate may for example be a wind turbine blade or the hull and superstructure of a yacht. Preferred substrates are wind turbine blades. The putty composition is preferably applied to regions of the substrate that are uneven or comprise gaps and recesses. Such regions may arise, for example, in the course of construction, by joining different individual components. Such regions may also arise through erosion-induced damage to the substrate. Preferably, the putty composition is applied directly onto the surface of substrate. Thus, the putty is in direct contact with the substrate; thus, no further coating layer is applied between substrate and putty. One or more further coating layers may be applied on top of the cured putty, including for example a primer, a topcoat and an erosion resistant Leading Edge Protective coating, to produce a multicoat coating system.

### The binder system

The binder system in this invention contains two reactive parts i) and ii) containing NH and OH reactive groups, respectively. In addition, a catalyst such as a tertiary amine or an acidic catalyst e.g. dibutyltin dilaurate is included to activate the cross-linking reaction. The amount of catalyst is adjusted with respect to ii) to properly control the curing process.

The reactions between i) and ii) with the polyisocyanate have different reaction rates. The ratio between these two reaction rates can be adjusted with the amount of catalyst.

The reaction that occurs between OH groups and the polyisocyanate produces urethane bonds. The reaction between NH groups and the polyisocyanate produces urea bonds. The final product is a hybrid polymer containing a combination of urea and urethane groups in its chemical structure.

The advantages of this hybrid polymer is a fast cross-linking process dominated by a catalysed reaction and increase of the hardness by the reaction of NH groups and isocyanates. The urea linkages form a harder material and therefore the material's surface hardens faster than a conventional polyurethane system allowing it to be sanded after a short period of time. On the other side when the binder only consists of a polyaspartic ester a hard surface is obtained while the inner core remains soft making the putty unsuitable for sanding.

### Base composition

The base composition a) comprises one or more amino functional resin comprising one or more polyaspartic ester and/or one or more polyetheraspartic ester; combined with one or more hydroxy functional resin comprising one or more hydroxy functional polymer and/or one or more castor oil based polyol.

### Hydroxy functional resin

In one embodiment, the hydroxy functional resin comprises one or more hydroxy functional polymer selected from for example hydroxy functional polyester, hydroxy functional polycarbonate and hydroxy functional acrylic polymer, and mixtures thereof. Said hydroxy functional polymer comprises at least two hydroxy functional groups.

Hydroxy functional polyesters are polymers that contains an ester functional group in their backbone. The polyesters are typically produced from bifunctional alcohols and dicarboxylic acid (or derivatives) or from lactones. Then a polyesterification reaction takes place. For example polyester diols are produced by a ring opening of a heterocycle ring (caprolactone monomer) by a glycol initiator. Polyesters need to be cured by a suitable external cross-linking agent to obtain the desired mechanical properties as well as durability and chemical resistance. Hydroxy functional polyesters contain in their structure a reactive hydroxyl group (OH) that reacts with an isocyanate group (NCO) to produce polyurethane bonds. In one embodiment, said hydroxy functional polyester comprises a polyester diol derived from caprolactone monomer, such as for example Capa^{®} 2043 from Ingevity, United States of America and Sovermol^{®} 1006 from BASF Ludwigshafen, Germany.

Hydroxy functional polycarbonates are a group of polymers containing carbonate groups in their chemical structures. In one embodiment, said polycarbonate comprises polycarbonate diols which are esterification products which may be formed by reaction of carbonic acid with polyols. In actual practice, as is known, the carbonate structures are introduced by means of phosgene or carbonic diesters under common reaction conditions. The reaction with diols, as for example with 3-methyl-1,5-pentanediol or 1,6-hexanediol, then gives the polycarbonate diols. Besides the carbonate functions joining the starting components, of course, such polycarbonate diols may also, proportionally, include further functional groups such as ester groups or ether groups, depending on the nature and amount of the starting compounds used. The polycarbonate diol is preferably a linear polycarbonate diol. The hydroxyl groups are preferably terminal, in other words arranged at both ends of the preferably linear polycarbonate diol (hydroxyl-terminated polycarbonate diol). Most preferably, the compound is an aliphatic polycarbonate diol for example from the Desmophen C portfolio from Covestro Deutschland AG, Leverkusen, Germany.

Hydroxy functional acrylic polymers may be prepared using one or more functional (meth)acrylate monomers resulting in a functionalized acrylic resin that can be cross-linked through their pendant functional groups using appropriate cross-linkers such as polyisocyanates. High-solid acrylic resins are prepared by using higher amounts of functional monomers (compared to conventional thermosetting acrylic resins), and the molecular weight is reduced by using a higher initiator concentration during solution polymerization. Examples are JONCRYL 948 from BASF Ludwigshafen, Germany, Sinocure 9237 from Arkema and Setalux 1118 from Allnex.

In a preferred embodiment, said hydroxy functional resin comprises one or more castor oil based polyol. Castor oil is a natural product containing various triglycerides esterified with glycerol. Ricinoleic acid makes up the main fraction of the fatty acids, with a typical concentration of more than 80 wt%, based on the total amount of fatty acids. Castor oil based polyols are known to the person skilled in the art as a bio-based polyol with application in polyurethane coatings. Examples of commercially available castor oil based polyols useful within the present invention includes Setathane^{®} D1145 and Setathane^{®} D1150 from Allnex, Netherlands B.V.; Ulfcar^{®} Polem A 1140 from Nivapol, Åby, Denmark and Agrol Star^{™} from Cargill United States.

The hydroxy functional resin may comprise mixtures of hydroxy functional polymers and castor oil based polyols.

The hydroxy functional resin preferably have a hydroxyl number in the range of 800 to 50, preferably from 400 to 150 mg KOH/g, most preferably from 270 to 180 mg KOH/g. The hydroxyl number is determined in accordance with DIN EN ISO 15880.

### Amino functional resin

The amino functional resin comprises one or more polyaspartic ester and/or one or more polyetheraspartic ester with a preference for polyaspartic ester.

### Polyaspartic ester

Polyaspartic esters are polyamines with secondary amino groups, more particularly with two secondary amino groups. Polyaspartic esters are commercially available and can be obtained by preparation methods familiar to the skilled person. Typically by reacting a polyamine with dialkyl maleate by the Michael reaction. In the context of the invention, the polyamine preferably comprises an aliphatic straight or branched alkylene and/or cycloalkylene residue.

In the context of the present invention, the term "polyaspartic ester" includes aliphatic polyaspartic esters according to formula (I) below wherein X is an aliphatic straight or branched alkylene and/or cycloalkylene residue. 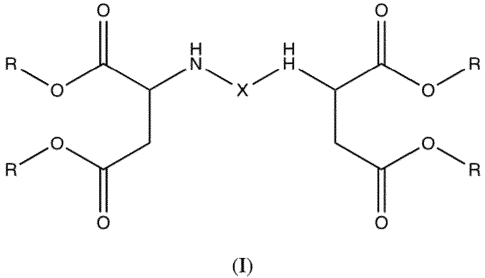 wherein each R represents a linear or branched C₁-C₁₀ alkyl residue, such as a linear or branched C₁-C₆ alkyl residue, such as for example a methyl, ethyl, propyl or butyl residue, preferably an ethyl residue; and X is a straight or branched divalent alkylene and/or cycloalkylene residue typically having 6 to 24 carbon atoms, preferably 6 to 16 carbon atoms. Typical examples of polyaspartic esters include substances sold under the trade names Desmophen NH 1220, Desmophen NH 1420, Desmophen NH 1423, Desmophen 1520 and Desmophen NH 1521 commercially available from Covestro Deutschland AG, Leverkusen, Germany.

### Polyetheraspartic ester

The term "polyetheraspartic ester" indicates compounds of formula (I) wherein X is a polyether, which herein typically indicates a polymer in which the repeating unit contains an alkyl residue of one or more carbon atoms linked by an oxygen atom, such as an alkyl residue of between two to six carbon atoms linked by an oxygen atom, such as an alkyl residue of two carbon atoms linked by an oxygen atom. One or more of said carbon atoms may be substituted with a small alkyl such as for example methyl, ethyl or propyl; preferably methyl. Typical polyetheramines useful to produce polyetheraspartic esters include the Jeffamine polyetheramines commercially available from Huntsman Corporation. Preferred polyetheraspartic esters according to the invention are represented by formula (I) wherein or X is polyether residue having a repeating unit of the structure below 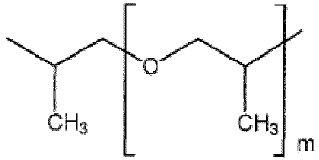 wherein m is in typically in the range of 2 to 35, such as in the range of 2 to 10, such as in the range of 2 to 6, such as in the range of 2 to 4. A commercially available polyetheraspartic ester is Desmophen NH 2850 XP, from Covestro Deutschland AG, Leverkusen, Germany. The amount of the amino functional resin comprising one or more polyaspartic ester and/or one or more polyetheraspartic ester is situated preferably in the range from 3 to 22 wt %, more preferably 5 to 15 wt %. based on the total weight of the putty composition of the invention.

The polyaspartic esters and polyetheraspartic esters according to the invention preferably have an amine number of 100 to 300 mg KOH/g, preferably 190 to 250 mg KOH/g. The amine number is determined in accordance with DIN EN ISO 15880.

### Curing agent

The putty composition of the invention further comprises a curing agent comprising one or more polyisocyanates. In the present context, "polyisocyanate" refers to any organic compound that has two or more reactive isocyanate (-NCO) groups in a single molecule such as diisocyanates, triisocyanates, tetraisocyanates, etc., and mixtures thereof. Cyclic and/or linear polyisocyanate molecules may usefully be employed. The number of isocyanate groups per molecule is readily determinable via the isocyanate content and the number-average molecular weight of the respective polyisocyanate. The isocyanate content can be determined for example in accordance with DIN EN ISO 11909 by reaction of the respective sample with excess dibutylamine and back-titration of the excess with hydrochloric acid against bromophenol blue.

Examples of polyisocyanates according to the invention are compounds that are known per se, preferably aliphatic polyisocyanates with particular mention of diisocyanates and their dimers and trimers such as uretdiones and isocyanurates. Examples include derivatives of hexamethylene-1,6- diisocyanate (also denoted hexamethylene diisocyanate or HDI), octamethylene diisocyanate, decamethylene diisocyanate, dodecamethylene diisocyanate, tetradecamethylene diisocyanate, trimethylhexane diisocyanate, tetramethyl-hexane diisocyanate, isophorone diisocyanate (IPDI), 2-isocyanatopropylcyclohexyl isocyanate, dicyclohexylmethane 2,4'-diisocyanate, dicyclohexylmethane 4,4'-diisocyanate, 1,4- or 1,3-bis(isocyanato-methyl)cyclohexane, 1,4- or 1,3- or 1,2-diisocyanato-cyclohexane, and 2,4- or 2,6-diisocyanato-1-methyl-cyclohexane, and mixtures of these. Most preferred is hexamethylene diisocyanate (HDI).

Also, reaction products or prepolymers of aliphatic polyisocyanates may be utilized. Particular mention is made of biurets, allophohanates, uretdiones and isocyanurates of the stated polyisocyanates. Preference here is given to using the dimers and/or trimers of the stated polyisocyanates, preferably of hexamethylene diisocyanate. In particular, the uretdiones and isocyanurates of the abovementioned polyisocyanates, that are known per se and also available commercially.

Isocyanurates can be prepared from any of a very wide variety of isocyanates, in the presence of particular catalysts, such as for example sodium formate, potassium acetate, tertiary amines, or triphenyl-phosphines. The isocyanurate ring system constitutes a trimer consisting of three isocyanate groups in each case, are very stable, retaining their integrity even at high temperatures of more than 100° C., for example. Each of these three isocyanate groups originates from three different molecules of the respective isocyanate used; in other words trimeric structures are formed. If polyisocyanates are used, examples being diisocyanates such as HDI, it is possible for an intermediate crosslinking to occur, and hence a plurality of isocyanurate rings may become linked to one another. It is known also to be possible for fractions of bridging diols, as for example hexanediol, to be added during the preparation of the isocyanurates, in order to modify their reactivity, for example, and in this way for a plurality of isocyanurate ring systems to become joined to one another. Likewise uretdiones, consisting of two isocyanate groups can be prepared by a similar catalytic reaction.

Preferred polyisocyanates are solvent-free and are substantially free of isocyanate monomer, i.e. contains less than 0.5 % and more preferably less than 0.3 % of isocyanate monomer as measured according to DIN EN ISO 10 283.

When polyisocyanates are used as curing agents, the functionality is defined as the number of isocyanate groups present per molecule. For practical purposes, the number of isocyanate groups is provided as an average due to the presence of various related types of polyisocyanate molecules within a commercial product. The expression "average functionality" refers to the functionality of a combination of two or more polyisocyanates. The "average functionality" is calculated as the total number of reactive (isocyanate groups) divided by the total number of polyisocyanate molecules. Typically, lower functionality yields less crosslinking, which results in more flexible, softer products, and higher functionality yields higher crosslinking and resulting stiffer, harder products. In a preferred embodiment, the average functionality of the polyisocyanates used in the composition of the present invention is in the range of 2-4, such as in the range of 2-3.5 or in the range of 3-4 or 2-3.

The one or more polyisocyanates applied in the current invention preferably have an NCO content in the range of 10-25%, such as in the range of 15-25%, such as in the range of about 20-24% or 20-23% by weight.

Examples of commercially available polyisocyanates which are useful within the present invention include Desmodur N 3200, Desmodur N 3600, Desmodur N 3900, Desmodur XP 2860 ; all available from Covestro Deutschland AG, Leverkusen, Germany; and Basonat HA 1000, Basonat HA 2000, Basonat HI 2000 and Basonat HA 3000 from BASF

The choice of the one or more polyisocyanates to be comprised in the curing agent may be based on the desired properties of the putty composition, such as the preferred degree of viscosity of the putty composition and the stiffness of the dry putty. The term "one or more polyisocyanates" indicates that a blend of polyisocyanates can be used.

The total number of isocyanate groups in the curing agent component to the total number of hydroxy and amine groups in the base composition will typically be in the range of 80: 100 to 160: 100, such as 90: 100 to 125: 100, such as 95: 100 to 120: 100, preferably in the range of 100: 100 to 120: 100, such as 100: 100 to 110: 100 or 105: 100 to 110: 100. Preferably, the number of isocyanate groups is in excess of the number of amino groups, preferably just in minor excess in order to facilitate complete reaction of the amine groups.

### Catalyst

In a preferred embodiment, a catalyst is applied to accelerate the reaction between the reactive hydroxy groups in ii) and the isocyanate groups in b). Such catalysts may be selected from either electrophilic compounds (Lewis acids) and nucleophilic compounds (Lewis bases). Catalysts which act as Lewis acids are organic salts of metals of the subgroups of the periodic table of elements. The preferred catalysts are salts of tin, zinc, zirconium, and bismuth. Among Lewis bases suggested compounds are tertiary amines, with such as triethylene diamine (DABCO = diaza bicyclo octane). The use of catalysts may shorten the pot-life of the putty composition. Therefore, the optimum catalysts are those which accelerate the reactivity of crosslinking reactions when added in just small amounts. Excessive use of catalyst should be avoided because weatherability and heat stability may deteriorate. The amount of catalyst is typically adjusted based on the amount and the hydroxyl content of the hydroxy functional resin ii). Preferably, the catalyst is present in an amount of about 0.02 to 1.00 wt.%, such as 0.02 to 0.5 wt%, such as 0.05 to 0.5 or 0.05 to 0.3 or 0.02 to 0.3 wt% based on the total weight of the base composition a). The catalyst is introduced in composition a) before mixing a) and b).

### Further components

The putty composition typically comprises further components such as fillers, pigments and additives.

Examples of fillers and pigments are calcium carbonate, dolomite, talc, mica, barium sulfate, kaolin, silica, titanium dioxide, red iron oxide, yellow iron oxide, black iron oxide, carbon black, phthalocyanine blue and phthalocyanine green. The total amount of filler(s) and pigment(s) excluding below mentioned hollow microspheres is preferably between 5-65%, such as between 5-60%, such as between 5-50%, , preferably between 10-50% of filler(s) and pigment(s) by weight of the putty composition.

In order to reduce the weight of the putty, hollow microspheres can be added. These are preferably present in the base composition of the putty composition. Hollow microspheres are so-called lightweight fillers and should not be confused with the fillers described above. The spheres are typically filled with gas such as air, nitrogen and/or carbon dioxide or n-alkanes, isoalkanes and/or neoalkanes. The hollow microspheres may have inorganic or organic sphere shells. Inorganic hollow microspheres include glass, silicate, silicon dioxide, and ceramic microspheres. Organic microspheres include polymeric microspheres, such as styrene-based and/or poly(meth)acrylate- based plastomers, acrylonitrile-based polymers such as polyacrylonitrile-methyl methacrylate copolymers or polyacrylonitrile polymers. Suitable hollow microspheres are commercially available, for example under the tradenames Expancel DE (from Nouryon), 3M Glass Bubbles (from 3M), or Dualite E (from Henkel). Preferably the hollow microspheres are inorganic hollow microspheres. The particle diameter (D50 value, volume-based) of the hollow microspheres is typically in the range of 30 to 65 micrometers, preferably in the range of 35 to 60 micrometers (determined by laser diffraction in accordance with ISO 13320:2009-10). The amount of the hollow microspheres in the putty composition is preferably in the range of 0.5 to 15 wt%, such as in the range of 5-15 wt%, such as in the range of 8 to 12 wt%, based on the total weight of the putty composition. The use of hollow microspheres leads to reduction in the density of the putty.

Examples of additives are diluents, wetting agents, levelling agents and dispersants; defoaming agents such as silicone oils; stabilizers against moisture (water scavengers) such as substituted isocyanates, substituted silanes, ortho formic acid trialkyl esters and synthetic zeolites; modified hydrogenated oils and fumed silicas; and rheology modifiers (sometimes called thixotropic agents or anti-sag agents) which are typically added to adjust viscosity of the putty.

Moreover, the base composition and the curing agent could be supplemented with one or more solvents. Preferable examples of suitable solvents are organic solvents such as toluene, xylene and naphtha solvent; ketones such as methyl ethyl ketone, methyl isobutyl ketone, diacetone alcohol and cyclohexanone; esters such as methoxypropyl acetate, n-butyl acetate and 2-ethoxyethyl acetate; and mixtures thereof. However as regards the claimed putty composition, a solvent would typically not be relevant to include. Thus, the putty composition of the invention would typically be prepared in solvent-free form and thus, provide a good environmental profile. Hence, any solvent, if present, preferably constitute less than 5 %, such as less than 2.5%, such as less than 1% by weight of the total putty composition. Most preferably, The putty composition is substantially free of any solvents meaning that one or more organic solvents has not been explicitly included as a component in the putty composition. If at all, only small amounts of one or more organic solvents are present in the putty composition as a result of the use of for example certain additives, which may be optionally obtained commercially in solution in organic solvents. If a solvent is included, it will be in a limited amount allowing for a viscosity facilitating optimal application properties with a spatula or putty knife.

### Preparation of the putty composition of the invention

The putty compositions can be prepared from commercially available components. The base composition and the curing agent may typically also comprise one or more other constituents, like the fillers and pigments and additives above (e.g. thickening agents, wetting agents, dispersing agents, rheology modifiers, and defoamers). Preferably the putty also comprises hollow glass spheres.

Preferably, the base composition a) is prepared in two or three steps. In the first step a dispersion of the water scavenger, thickener, pigments and other additives is prepared as a portion of the binder system called the mill base. In the second step the mill base is blended with the rest of the binder components (including the hydroxyfunctional and aminofunctional resins) and a catalyst to obtain the final base composition a) except the optional hollow microspheres. The third optional step comprises addition of hollow microspheres at low mixing speed.

The putty composition may be prepared by suitable techniques that are commonly used within the field of coating production. The putty composition may be prepared by mixing two or more components e.g. two pre-mixtures whereof one pre-mixture comprises the base composition a) and one pre-mixture comprises the curing agent b). Prior to mixing one or both of the pre-mixtures may be preconditioned to meet specific temperature requirements. It should be understood that when reference is made to the putty composition, it is the final mixed putty composition wherein a) and b) have been mixed.

Mixing of the base composition a) and the curing agent b) allows a chemical reaction between the hydroxy groups and amino groups in the base composition (of polyol and polyaspartic ester amine, respectively), and the isocyanate groups of the polyisocyanates in the curing agent. The mixing ratio between the reactive components must therefore be carefully controlled in order to obtain a putty composition with the desired physical properties. A catalyst is included to activate the cross-linking reaction. The amount of catalyst is adjusted with respect to ii) to properly control the curing process.

The mixing ratio of base composition a) and curing agent b) is typically defined as the volumetric or weight ratio between the base composition and the curing agent. In the context of the present invention, the mixing ratio in volume between the base composition and the curing agent is typically between 1:1 and 5:1, preferably between 2:1 and 4:1 such as about 3:1. It will be within the capacity of the skilled person to optimize the mix ratio to obtain the desired properties of the putty composition. Typically, the mix ratio of a) and b) will be adjusted to allow for an optimal stoichiometric ratio of hydroxy and amino functional groups relative to isocyanate groups.

### Application of the putty composition of the invention

Application of the putty compositions can be done by standard application methods such as by spatula, or putty knife.

Typically, the putty composition of the invention is applied directly on the substrate without an intermediate coating layer between the substrate and the putty composition. Preferably, the putty composition is applied in one or more layers and the total thickness of the putty composition is between 0.1-10 mm, such as 0.5-10 mm, such as 1-10 mm, such as between 1.5-8 mm, most preferably between 2-7 mm.

Also preferably, the part of the outer surface of the wind turbine blade whereon the putty composition is applied comprises at least a predominant portion of the wind blade, but usually the total surface of the wind turbine blade can be coated with the putty composition.

Hence, the present invention also provides a method of applying the putty composition of the invention on the outer surface of a substrate such as a wind blade, said method comprising applying a putty composition as defined herein to at least a part of the surface of said wind blade; and allowing the putty composition to dry to obtain a hardness suitable for sanding.

After application of the putty composition to the wind blade, the composition is allowed to dry under controlled ambient temperature and humidity. The putty composition is preferably allowed to dry at a temperature not exceeding 40°C, in particular at a temperature in the range of 10-35°C, such as a temperature in the range of 15-30 °C. In the context of the present invention, the time from application of the putty on a surface until the putty has obtained a hardness making it suitable for sanding (also called "time to sand") is usually between 30 min to 4 hours, such as between 30 minutes to 2-3 hours, preferably between about 30 minutes to 2 hours. It has been observed that there is a correlation between increase of hardness over time (such as superficial hardness determined here using the durometer Shore A or Shore D) and time to sand. It has been determined that when the putty reaches a determined value of hardness the surface is suitable to be sanded. For optimal sanding conditions the hardness should preferably be above 70 more preferably above 75 Shore A, most preferably above 80 Shore A, and above 15 more preferably above 20 Shore D, when measured according to ASTM D2240. Using only a polyaspartic or polyetheraspartic ester in the base composition does not provide a putty suitable for wind blades, and that is ready for sanding after 30 min to 4 hours. The inventors have observed that, the putty surface is rapidly hardening making a kind of a shell while the composition between the outer putty surface and the substrate remains to be a soft material.

After sanding, the putty may be overcoated with a primer, and/or a top coat and/or a leading edge protective coating; a pore filler may also be applied.

### Embodiments of the invention

In the following, embodiments of the invention are disclosed. It should be understood that the various aspects, embodiments, implementations and features of the invention mentioned herein may be claimed separately, or in any combination.

In one aspect, the invention relates to a putty composition comprising
a) a base composition comprising
   i) one or more amino functional resin comprising one or more polyaspartic ester and/or one or more polyetheraspartic ester, and
   ii) one or more hydroxy functional resin comprising one or more hydroxy functional polymer and/or one or more castor oil based polyol;
   and
b) a curing agent comprising one or more polyisocyanates.

In a preferred embodiment, the one or more hydroxy functional resin ii) constitutes 1-10 parts (weight) relative to 1 part (weight) of the one or more amino functional resin i), such as 1-9 parts such as 1.5-9 parts such as 2-9 parts, or 1-8 parts such as 1.5-8 parts such as 2-8 parts, or 1-7 parts such as 1.5-7 parts such as 2-7 parts, or 1-6 parts such as 1.5-6 parts such as 2-6 parts, or 1-5 parts most preferably 1.5-5 parts such as 2-5 parts, or 1-4 parts such as 1.5-4 parts such as 2-4 parts, or 1-3 parts such as 1.5-3 parts such as 2-3 parts (weight) relative to 1 part (weight) of the one or more amino functional resin i).

In one embodiment, said putty composition comprises
a) a base composition comprising
   i) one or more amino functional resin comprising one or more polyaspartic ester, and
   ii) one or more hydroxy functional resin comprising one or more hydroxy functional polymer and/or one or more castor oil based polyol;
   and
b) a curing agent comprising one or more polyisocyanates;
wherein the one or more hydroxy functional resin ii) constitutes 1-10 parts (weight) relative to 1 part (weight) of the one or more amino functional resin i), such as 1-9 parts such as 1.5-9 parts such as 2-9 parts, or 1-8 parts such as 1.5-8 parts such as 2-8 parts, or 1-7 parts such as 1.5-7 parts such as 2-7 parts, or 1-6 parts such as 1.5-6 parts such as 2-6 parts, or 1-5 parts preferably 1.5-5 parts such as 2-5 parts, or 1-4 parts such as 1.5-4 parts such as 2-4 parts, or 1-3 parts such as 1.5-3 parts such as 2-3 parts (weight) relative to 1 part (weight) of the one or more amino functional resin i).

In one embodiment, said putty composition comprises
a) a base composition comprising
   i) one or more amino functional resin comprising one or more polyaspartic ester, and
   ii) one or more hydroxy functional resin comprising one or more hydroxy functional polymer and/or one or more castor oil based polyol;
b) a curing agent comprising one or more polyisocyanates; and
c) a catalyst;
wherein the one or more hydroxy functional resin ii) constitutes 1-10 parts (weight) relative to 1 part (weight) of the one or more amino functional resin i), such as 1-9 parts such as 1.5-9 parts such as 2-9 parts, or 1-8 parts such as 1.5-8 parts such as 2-8 parts, or 1-7 parts such as 1.5-7 parts such as 2-7 parts, or 1-6 parts such as 1.5-6 parts such as 2-6 parts, or 1-5 parts preferably 1.5-5 parts such as 2-5 parts, or 1-4 parts such as 1.5-4 parts such as 2-4 parts, or 1-3 parts such as 1.5-3 parts such as 2-3 parts (weight) relative to 1 part (weight) of the one or more amino functional resin i).

In a one embodiment, said one or more hydroxy functional resin ii) constitutes 1-10 parts (weight) relative to 1 part (weight) of the one or more amino functional resin i), such as 1.5-5 parts such as 1.5-4 parts, or 2-5 parts such as 2-4 parts (weight) relative to 1 part (weight) of the one or more amino functional resin i).

In one embodiment, said one or more hydroxy functional resin comprises one or more hydroxy functional polymer selected from hydroxy functional polyesters, hydroxy functional polycarbonates and hydroxy functional acrylic polymers and mixtures thereof.

In one embodiment, said one or more hydroxy functional polymer comprises a polyester diol derived from caprolactone monomer. In one embodiment, said one or more hydroxy functional polymer comprises one or more polycarbonate diols. In a preferred embodiment, said polycarbonate diol comprises a linear polycarbonate diol, preferably the hydroxyl groups of said polycarbonate diol are terminal. Preferably said polycarbonate diol comprises an aliphatic polycarbonate diol. In one embodiment, said hydroxy functional resin comprises one or more hydroxy functional acrylic polymer.

In a preferred embodiment, said one or more hydroxy functional resin comprises one or more castor oil based polyol. In one embodiment, said hydroxy functional resin comprises a mixture of hydroxy functional polymers and castor oil based polyols.

In a preferred embodiment, said hydroxy functional resin have a hydroxyl number in the range of 800 to 50, preferably from 400 to 150 mg KOH/g, most preferably from 270 to 180 mg KOH/g determined in accordance with DIN EN ISO 15880.

In one embodiment, said one or more amino functional resin comprises one or more polyaspartic ester. In a further embodiment, said polyaspartic ester comprises the compound of formula (I) below 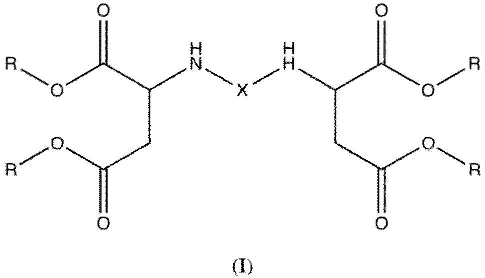 wherein each R represents a linear or branched C₁-C₁₀ alkyl residue, such as a linear or branched C₁-C₃ alkyl residue, preferably an ethyl residue; and X is a straight or branched divalent alkylene and/or cycloalkylene residue having 6 to 24 carbon atoms, such as 6 to 16 carbon atoms. In a preferred embodiment, R is an ethyl residue.

In one embodiment, said one or more amino functional resin comprises one or more polyetheraspartic ester. In a further embodiment, said polyetheraspartic ester comprises the compound of formula (I) below, 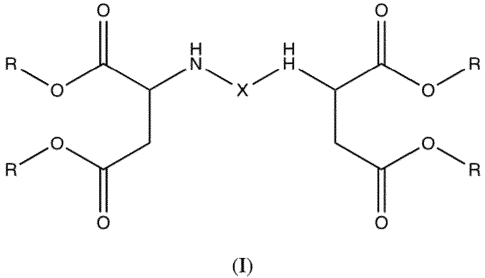 wherein each R represents a linear or branched C₁-C₁₀ alkyl residue, such as a linear or branched C1-C3 alky residue; and X is a polyether residue. In a preferred embodiment, R is an ethyl residue. In a preferred embodiment, said polyether residue has a repeat unit of the structure below 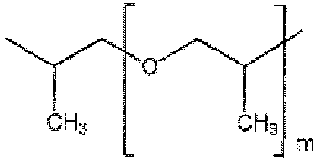 wherein m is in the range of 2 to 35, such as in the range of 2 to 10, such as in the range of 2 to 6, such as in the range of 2 to 4. In a preferred embodiment, R is an ethyl residue.

Preferably, the amount of the amino functional resin comprising one or more polyaspartic ester and/or one or more polyetheraspartic ester is situated in the range from 3 to 22 wt %, more preferably in the range from 5 to 15 wt %. based on the total weight of the putty composition of the invention.

In a preferred embodiment, said polyaspartic esters and polyetheraspartic esters have an amine number of 100 to 300 mg KOH/g, preferably between 190 to 250 mg KOH/g determined in accordance with DIN EN ISO 15880.

In one embodiment, said one or more amino functional resin comprises a mixture of said polyaspartic and said polyetheraspartic ester.

In one embodiment, said one or more polyisocyanates in b) have an NCO content in the range of 10-25%, such as in the range of 15-25%, such as in the range of about 20-24% or 20-23% by weight. In one embodiment, the average functionality of said one or more polyisocyanates is in the range of 2-4, such as in the range of 2-3.5 or in the range of 3-4 or 2-3. In a preferred embodiment, one or more of said one or more polyisocyanates comprises an aliphatic polyisocyanate, preferably based on hexamethylene diisocyanate (HDI).

In one embodiment, a) and b) are present in said putty composition in a volume ratio in the range of between 1:1 and 5:1, preferably between 2:1 and 4:1, preferably between 2.5:1 and 3.5:1 such as about 3:1. In one embodiment, a) and b) are present in said putty composition in an amount so that the stoichiometric ratio of the number of isocyanate groups in the curing agent component to the number of amine and hydroxy groups in the base composition is in the range of 80: 100 to 160: 100, such as 90: 100 to 125: 100, such as 95: 100 to 120: 100, preferably in the range of 100: 100 to 120: 100, such as 100: 100 to 110: 100 or 105: 100 to 110: 100; such as about 100:100.

In one embodiment, said putty composition further comprises a catalyst. In a further embodiment, said catalyst is selected from one or more tertiary amines or one or more acidic catalyst. In one embodiment, said catalyst is comprised in the base composition a) before mixing with b). In another embodiment, said catalyst is added separately when mixing a) and b). In a preferred embodiment, said catalyst is present in an amount of in an amount of 0.02 to 1.00 wt%, such as 0.02 to 0.5 wt%, such as 0.05 to 0.5 or 0.05 to 0.3 or 0.02 to 0.3 wt% based on the total weight of the base composition a).

In one embodiment, said putty composition further comprises one or more further components selected from fillers, pigments and additives. In one embodiment, said fillers and pigments are selected from one or more of calcium carbonate, dolomite, talc, mica, barium sulfate, kaolin, silica, titanium dioxide, red iron oxide, yellow iron oxide, black iron oxide, carbon black, phthalocyanine blue and phthalocyanine green. In a preferred embodiment, the total amount of said fillers and pigments (excluding hollow microspheres) is between 5-65%, such as between 5-60%, such as between 5-50%, preferably between 10-50% by weight of the putty composition; or the total amount of fillers and pigments is between 10-75% such as between 15-40%, such as between 20-30% by weight of the putty composition. In one embodiment, said additives are selected from diluents, wetting agents, levelling agents and dispersants; defoaming agents such as silicone oils; stabilizers against moisture (water scavengers) such as substituted isocyanates, substituted silanes, ortho formic acid trialkyl esters and synthetic zeolites; rheology modifiers, modified hydrogenated oils and fumed silicas.

In one embodiment, said putty composition further comprises hollow microspheres. In a preferred embodiment, said hollow microspheres are inorganic microspheres, preferably selected from glass, silicate, silicon dioxide, and ceramic microspheres. In a preferred embodiment, the amount of the hollow microspheres in the putty composition is in the range of 0.5 to 15 wt%, such as in the range of 5-15 wt%, preferably in the range of 2-10 wt% .based on the total weight of the putty composition.

In one embodiment, said putty composition has a solvent content less than 5 %, such as less than 2.5%, such as less than 1% by weight of the total putty composition. Preferably, said putty composition is substantially free of any solvent.

In one embodiment, said putty composition is having a substantially higher viscosity than a conventional coating composition. In one embodiment, said putty composition is having a viscosity making it suitable for application with a spatula or putty knife to fill gaps and irregularities on the surface of a substrate.

In one embodiment, said putty composition obtains a hardness above 70 shore A, such as above 75 shore A, such as above 80 shore A and above 15 shore D, such as above 20 shore D within a period between 30 min to 5 hours, such as in a period between 30 min to 4 hours such as a period between 30 min to 3 hours such as between 30 min to 2 hours after application on the surface of a substrate, when said hardness is measured according to ASTM D2240.

In one aspect, the invention relates to a kit of parts comprising
A) a first container comprising a) a base composition comprising
   i) one or more amino functional resin comprising one or more polyaspartic ester and/or one or more polyetheraspartic ester as described for the putty composition above, and
   ii) one or more hydroxy functional resin comprising one or more hydroxy functional polymer and/or one or more castor oil based polyol as described for the putty composition above;
      and
B) a second container comprising b) a curing agent comprising one or more polyisocyanates as described for the putty composition above.

In a preferred embodiment, in the base composition a) in container A) the one or more hydroxy functional resin ii) constitutes 1-10 parts (weight) relative to 1 part (weight) of the one or more amino functional resin i), such as 1-9 parts such as 1.5-9 parts such as 2-9 parts, or 1-8 parts such as 1.5-8 parts such as 2-8 parts, or 1-7 parts such as 1.5-7 parts such as 2-7 parts, or 1-6 parts such as 1.5-6 parts such as 2-6 parts, or 1-5 parts, preferably 1.5-5 parts such as 2-5 parts, or 1-4 parts such as 1.5-4 parts such as 2-4 parts, or 1-3 parts such as 1.5-3 parts such as 2-3 parts (weight) relative to 1 part (weight) of the one or more amino functional resin i).

In one embodiment, in the base composition a) on container A) said one or more hydroxy functional resin ii) constitutes 1-10 parts (weight) relative to 1 part (weight) of the one or more amino functional resin i), such as 1.5-5 parts such as 1.5-4 parts, or 2-5 parts such as 2-4 parts (weight) relative to 1 part (weight) of the one or more amino functional resin i).

In one embodiment, said first container A) further comprises a catalyst as described for the putty composition above. In another embodiment, said kit of parts further comprises C) a third container comprising c) a catalyst as described for the putty composition above.

In a preferred embodiment, said components a) and b) are present in container A) and B) in an amount adapted for obtaining a putty composition when mixed, i.e. a composition having a substantially higher viscosity than a coating composition.

In a preferred embodiment, said kit is for preparation of the putty composition according to the invention.

In one embodiment, said base composition a) in container A) and/or said curing agent b) in container B) further comprises one or more further components selected from fillers, pigments and additives. In one embodiment, said fillers and pigments are selected from one or more of calcium carbonate, dolomite, talc, mica, barium sulfate, kaolin, silica, titanium dioxide, red iron oxide, yellow iron oxide, black iron oxide, carbon black, phthalocyanine blue and phthalocyanine green. In one embodiment, said additives are selected from diluents, wetting agents, levelling agents and dispersants; defoaming agents such as silicone oils; stabilizers against moisture (water scavengers) such as substituted isocyanates, substituted silanes, ortho formic acid trialkyl esters and synthetic zeolites; rheology modifiers, modified hydrogenated oils and fumed silicas.

In one embodiment, said base composition a) in container A) further comprises hollow microspheres. In a preferred embodiment, said hollow microspheres are inorganic microspheres, preferably selected from glass, silicate, silicon dioxide, and ceramic microspheres. In a preferred embodiments, said hollow microspheres are present in an amount allowing for a content in the range of 0.5 to 15 wt%, such as in the range of 5-15 wt%, such as in the range of 8 to 12 wt%, based on the total weight of the final putty composition.

In one aspect, the invention relates to the use of a putty composition according to the invention for application on the outer surface of a substrate such as on the surface of a fiber-reinforced plastic substrate such as an epoxy resin-based plastic substrate; preferably on the outer surface of a wind blade. In a further embodiment said putty is used for filling gaps and irregularities on said surface In one embodiment, the application of the putty composition is preferably performed by a spatula or putty knife.

In one aspect, the invention relates to a method for applying a putty composition on the outer surface of a substrate. In one embodiment, said method comprises applying putty composition directly on the substrate without an intermediate coating layer between the substrate and the putty composition. In one embodiment, said putty composition is applied with a putty knife or a spatula. In one embodiment, said method comprises applying said putty composition in one or more layers. Preferably, the total thickness of the putty composition is between 0.1-10 mm, such as 0.5-10 mm, such as 1-10 mm, such as between 1.5-8 mm, most preferably between 2-7 mm. In one embodiment, said putty composition is applied on the outer surface of a wind blade.

In one aspect, the invention relates to a substrate having on at least a part of the outer surface, a putty layer obtained from a putty composition according to the invention. In one embodiment, said substrate comprises a fiber-reinforced plastic substrate such as an epoxy resin-based plastic substrate, preferably a wind turbine blade. In one embodiment, said substrate comprises a multilayer system including the putty layer and one or more coating layers selected from a primer and/or a topcoat and/or a leading edge protective coating layer.

In a preferred embodiment, said substrate comprises a multilayer system comprising
i) a cured putty layer obtained from a putty composition according to the invention applied on the outer surface of the substrate; and
ii) optionally a cured primer layer applied on the cured putty layer; and
iii) a cured topcoat; and
iv) optionally a cured leading edge protective coating layer;
wherein
iii) and iv) may be applied in reverse order so that either said leading edge protective coating layer has been applied on top of the cured topcoat; or said topcoat layer has been applied on top of the cured leading edge protective coating layer.

In a preferred embodiment, said topcoat and/or said leading edge protective coating layer is obtained from a coating composition described in WO 2020/260578, which is incorporated herein in its entirety.

In a preferred embodiment, said topcoat and/or said leading edge protective coating layer is obtained from a coating composition comprising
a) a base composition comprising a polyetheraspartic ester having the formula (I) below 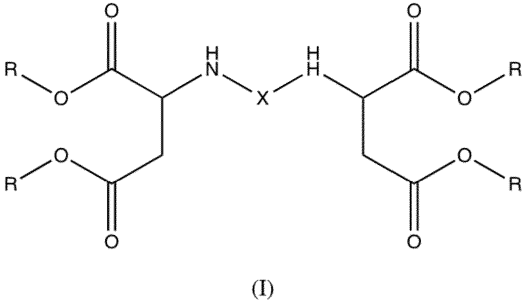 wherein each R represents a linear or branched C₁-C₁₀ alkyl residue, such as a linear or branched C₁-C₆ alkyl residue, such as for example a methyl, ethyl, propyl or butyl residue; and wherein X is a polyether; and
b) a curing agent comprising one or more polyisocyanates.

All references, including publications, patent applications, and patents, cited herein are hereby incorporated by reference in their entirety and to the same extent as if each reference were individually and specifically indicated to be incorporated by reference and were set forth in its entirety herein (to the maximum extent permitted by law), regardless of any separately provided incorporation of particular documents made elsewhere herein.

The use of the terms "a" and "an" and "the" and similar referents in the context of describing the invention are to be construed to cover both the singular and the plural, unless otherwise indicated herein or clearly contradicted by context. For example, the phrase "the composition" is to be understood as referring to various "compositions" of the invention or particular described aspect, unless otherwise indicated.

The description herein of any aspect or aspect of the invention using terms such as "comprising", "having," "including" or "containing" with reference to an element or elements is intended to provide support for a similar aspect or aspect of the invention that "consists of", "consists essentially of" or "substantially comprises" that particular element or elements, unless otherwise stated or clearly contradicted by context (e.g., a composition described herein as comprising a particular element should be understood as also describing a composition consisting of that element, unless otherwise stated or clearly contradicted by context).

The use of any and all examples, or exemplary language (including "for instance", "for example", "e.g.", and "such as") in the present specification is intended merely to better illuminate the invention, and does not pose a limitation on the scope of invention unless otherwise indicated.

Headings and sub-headings are used herein for convenience only, and should not be construed as limiting the invention in any way. The use of any and all examples, or exemplary language (including "for instance", "for example", "e.g.", and "such as") in the present specification is intended merely to better illuminate the invention, and does not pose a limitation on the scope of invention unless otherwise indicated. The citation and incorporation of patent documents herein is done for convenience only, and does not reflect any view of the validity, patentability and/or enforceability of such patent documents.

It should be understood that the various aspects, embodiments, implementations and features of the invention mentioned herein may be claimed separately, or in any combination.

### EXPERIMENTAL

The invention will be illustrated by the following non-limiting examples.

### Preparation and application of putties

The components of each of the base composition a) and the curing agent b) were produced by mixing the indicated ingredients for each of a) and b) in a conventional manner known to the person skilled in the art.

The base composition a) was prepared in two steps. In the first step the dispersion of the pigment in water, stabilizer and thickener, so-called mill base, was prepared. In the second step the mill base was blended with the catalyst and the remaining binder components including hydroxyfunctional and aminofunctional resins. In a separate step hollow glass spheres were added to obtain the final base composition a).

### Mill base preparation procedure

Solid particles and additives were added to the resins and dispersed using a high speed disperser until an acceptable degree of dispersion was achieved.

Other components such as additives (e.g. thickening agents, wetting agents, dispersing agents, rheology modifiers, catalyst and defoamers) and fillers were added to the mixture. At the end, the degree of dispersion (fineness of grind) of the solid was checked by using a grind gauge (Sheen Instruments) made of steel with a twin channel of e.g. 0-50 µm.

### Addition of glass spheres

Afterwards the glass spheres were incorporated at low mixing speed to obtain the finalcomponent a).

Component a) was then subsequently mixed with component b) prior to application.

### Application

The mixed putty composition was applied by a putty knife in a dry film thickness (dft) of4-7 mm directly to a base laminate, an epoxy glass fiber reinforced plastic (GFRP) laminate.

Tables 1 - 3 below indicate the identity of the hydroxyfunctional and aminofunctional resins and polyisocyanates applied in the examples.

**Table 1: Hydroxy functional resin applied in the examples (available from Allnex, Netherlands B.V. and Ingevity, USA).**

| **Trade name** | **Description** | **Hydroxyl content (%) or Hydroxyl value (mg KOH/g)** | **Viscosity (mPa·s)** |
|---|---|---|---|
| Setathane^{®} D1145 | Castor oil based polyol | 7.1 ± 0.5 % | 2950 (at 23°) |
| Setathane^{®} D1150 | Castor oil based polyol | 4.7 ± 0.2 % | 3500 (at 23°) |
| Capa^{®} 2043 | Caprolactone derived polyester diol | 280 mg KOH/g | 40 (at 60°) |

**Table 2: Amino functional resin (polyaspartic ester) applied in the examples (available from Covestro Deutschland AG, Leverkusen, Germany).**

| **Trade name** | **Description** | **Amine value (mg KOH/g)** |
|---|---|---|
| Desmophen NH 1420 | Amino functional co-reactant for polyisocyanates. | 199 - 203 |

**Table 3: Polyisocyanates applied in the examples (available from Covestro Deutschland AG, Leverkusen, Germany).**

| **Polyisocyanate** | **Description** | **Isocyanate content (%)** | **Functionality (n)** | **Viscosity (mPa·s) at 23°C** |
|---|---|---|---|---|
| Desmodur^{®} N 3900 | Low-viscosity, aliphatic polyisocyanate resin based on hexamethylene Diisocyanate | 23.5 | 3.2 | 730 |
| Desmodur^{®} N 3200 | Aliphatic polyisocyanate (low-viscosity HDI biuret). | 23.0 | 3.5 | 2500 |

The catalyst used in the examples was Dibutyltin dilaurate (abbreviated DBTDL) TIB KAT 218 available from TIP chemicals, Mannheim Germany.

### Additives, pigments and fillers:

Wetting and dispersing agent: CAB-O-SIL^{®} from CABOT.
Rheology modifier: from Arkema.
Defoamer: from BYK Additives & Instruments.
Water scavenger: UOP L-Powder Eco and L-Paste Eco from Honeywell.
Pigments: Titanium dioxide
Fillers: Calcium carbonate and Talc.
Glass spheres: Glass bubbles from 3M ^{™}

### Compositions tested:

Tables 4a, 4b and 5 below represent putty compositions with and without additives, pigments and fillers. The amounts of each component are given in percentages by weight of each total putty composition. A 6 mm layer of each of the compositions were applied and the hardness was measured according to ASTM D2240 with a durometer over time.

Table 4a and 4b show the contents and characterization of the exemplified test compositions (A to M) which are free of additives, pigments and fillers. Figures 1 and 2 indicate the hardness development (Shore A and D scales) and Tables 4a and 4b indicates the time to reach 20 shore D and 80 shore A. Compositions A, B, C and D are comparative examples outside the scope of the invention.

The data and figures indicate that the combination of a hydroxy functional resin and an amino functional resin comprising polyaspartic acid gives a better hardness profile than a conventional polyurethane putty containing only a hydroxy functional resin. The addition of the polyaspartic acid enabled a faster development of the hardness and therefore allowing the putty to form a surface suitable to be sanded in a shorter period of time without compromising the working time of the mixture. When only a hydroxy functional resin was used, the hardness development was slow. When the polyaspartic resin was the sole resin in the base composition the surface of the putty layer hardened rapidly while a soft inner composition was maintained between the putty surface and the substrate. The hardness in these cases can be measured (as seen in Table 4a), but the core remained soft and uncured. A transversal cut was done for films of 6 mm thickness at different curing times and the inner core was observed.

**Table 4a: Test putty compositions (no additives, pigments and fillers).**

| | | **A** Comp. | **B** Comp. | **C** Comp. | **D** Comp. | **E** | **F** | **G** |
|---|---|---|---|---|---|---|---|---|
| **Component a)** | **Hydroxy functional ii)** | | | | | | | |
| | Setathane D1145 | 56.7 | - | - | - | 36.8 | - | - |
| | Setathane D1150 | - | 66.2 | - | - | - | 46.6 | - |
| | Capa 2043 | - | - | 52.2 | - | - | - | 32.6 |
| | Catalyst | 0.12 | 0.09 | 0.13 | - | 0.08 | 0.06 | 0,08 |
| | **Amino functional i)** | | | | | | | |
| | Desmophen NH 1420 | 0 | 0 | 0 | 60,1 | 21,1 | 17,9 | 22,5 |
| *Parts OH functional ii) per 1 part NH functional i) (weight)* | | - | - | - | - | 1.7 | 2.6 | 1.5 |
| **Component b)** | **Polyisocyanate** | | | | | | | |
| | Desmodur N 3900 | 43.2 | 33.7 | 47.7 | 39.9 | 42.0 | 35.5 | 44.8 |
| | Desmodur N 3200 | - | - | - | - | - | - | - |
| *Stoichiometric ratio of hydroxy and amine groups in a) and isocyanate groups in b)* | | 1.0 | 1.0 | 1.0 | 1.0 | 1.0 | 1.0 | 1.0 |
| Time (hours) to reach 20 shore D | | < 1 | < 1 | < 1 | < 2* | < 1 | < 2.5 | 5 ^ |
| Time (hours) to reach 80 shore A | | 5 | Infinite | Infinite | < 2* | < 1 | < 5 | 24 ^ |
| Viscosity of component a) (mPa·s) | | N/A | N/A | N/A | N/A | N/A | N/A | N/A |
| Viscosity of component b) (mPa·s) | | 730 | 730 | 730 | 730 | 730 | 730 | 730 |

| | | | | | | | | |
|---|---|---|---|---|---|---|---|---|
| *a soft inner core was observed even at high shore A and D ^ reached shore 70 shore A and 17 shore D after 1 hour | | | | | | | | |

**Table 4b: Test putty compositions (no additives, pigments and fillers).**

| | | **H** | **I** | **J** | **K** | **L** | **M** |
|---|---|---|---|---|---|---|---|
| **Component a)** | **Hydroxy functional ii)** | | | | | | |
| | Setathane D1145 | 27.2 | - | - | 17.9 | - | - |
| | Setathane D1150 | - | 35.9 | - | - | 24.6 | - |
| | Capa 2043 | - | - | 23.7 | - | - | 15.4 |
| | Catalyst | 0.06 | 0.05 | 0.06 | 0.04 | 0.03 | 0.04 |
| | **Amino functional i)** | | | | | | |
| | Desmophen NH 1420 | 31.3 | 27.5 | 32.8 | 41.1 | 37.8 | 42.4 |
| *Parts OH functional ii) per 1 part NH functional i) (weight)* | | 0.87 | 1.3 | 0.72 | 0,43 | 0.65 | 0.36 |
| **Component b)** | **Polyisocyanate** | | | | | | |
| | Desmodur N 3900 | 41.5 | 36.5 | 43.4 | 40.9 | 37.6 | 42.2 |
| | Desmodur N 3200 | - | - | - | - | - | |
| *Stoichiometric ratio of hydroxy and amine groups in a) and isocyanate groups in b)* | | 1.0 | 1.0 | 1.0 | 1.0 | 1.0 | 1.0 |
| Time (hours) to reach 20 shore D | | <1 | <1 | < 5 | < 0.5 | <0.5 | <2.5 |
| Time (hours) to reach 80 shore A | | <1 | < 2.5 | <5 | <1 | <1 | 1 |
| Viscosity of component a) (mPa·s) | | N/A | N/A | N/A | N/A | N/A | N/A |
| Viscosity of component b) (mPa·s) | | 730 | 730 | 730 | 730 | 730 | 730 |

| | | | | | | | |
|---|---|---|---|---|---|---|---|
| *a soft inner core was observed | | | | | | | |

Table 5 lists formulations N-T which are putty compositions including additives, pigments and fillers. The time to sand for these formulations was between 45 minutes and 3 hours when shore D hardness was between 24-31.

**Table 5: Putty compositions with additives, pigments and fillers**

| | | **N** | **O** | **P** | **Q** | **R** | **S** | **T** |
|---|---|---|---|---|---|---|---|---|
| | **Hydroxy functional ii)** | | | | | | | |
| | Setathane D1145 | 26 | 26 | 20 | 23 | 20 | 22 | 20 |
| | Setathane D1150 | - | - | - | - | - | - | - |
| | Capa 2043 | - | - | - | - | - | - | - |
| | Catalyst | 0.15 | 0.15 | 0.12 | 0.07 | 0.06 | 0.07 | 0.06 |
| | **Amino functional i)** | | | | | | | |
| | Desmophen NH 1420 | 14 | 14 | 7.7 | 8.2 | 7.0 | 7.9 | 7.1 |
| **Component a)** | *Parts OH functional ii) per 1 part NH functional i) (weight)* | 1.9 | 1.9 | 2.6 | 2.8 | 2.8 | 2.8 | 2.8 |
| | **Additives:** | | | | | | | |
| | Wetting and dispersing agent | 1 | 1 | 1.1 | - | - | - | - |
| | Rheology modifier | 1.4 | 1.4 | 1.5 | 1 | 0.8 | 1 | 0.8 |
| | Defoamer | 0.25 | 0.25 | 0.29 | 0.32 | 0.26 | 0.3 | 0.27 |
| | Water scavenger | 4.6 | 4.7 | 5.2 | 5.2 | 4.2 | 5.3 | 4.3 |
| | **Pigments and fillers:** | | | | | | | |
| | Pigments | 3.6 | 3.6 | 4.0 | 4 | 3.3 | 4.1 | 3.4 |
| | Fillers | 6 | 6 | 32 | 29 | 39 | 30 | 38 |
| | Glass spheres | 9.2 | 9.3 | 5.6 | 5.3 | 4.3 | 5.4 | 4.4 |
| **Component b)** | **Polyisocyanate** | | | | | | | |
| | Desmodur N 3900 | 33.5 | - | - | - | - | - | - |
| | Desmodur N 3200 | 0 | 33.1 | 22.7 | 23.7 | 21.2 | 24.1 | 21.4 |
| *Stoichiometric ratio of hydroxy and amine groups in a) and isocyanate groups in b)* | | 1.1 | 1.1 | 1.1 | 1.01 | 1.1 | 1.1 | 1.1 |
| Time (hours) to reach 20 shore D | | N/A | N/A | N/A | N/A | < 2 | < 2 | < 3 |
| Time (hours) to reach 80 shore A | | N/A | N/A | N/A | N/A | < 2 | < 2 | 2.5 |
| Hardness (shore D) at sanding time | | 26 | 28 | 31 | N.A. | 24 | 29 | 28 |
| Time to sand (hours) | | 1 | 0.75 | 0.83 | 0.75 | 2 | 2,67 | 3 |
| Viscosity of component a) (mPa·s) | | N/A | N/A | N/A | 802488 | 2084900 | 935511 | 1836778 |
| Viscosity of component b) (mPa·s) | | 730 | 2500 | 2500 | 2500 | 2500 | 2500 | 2500 |

| | | | | | | | | |
|---|---|---|---|---|---|---|---|---|
| *N*/*A: not applicable* | | | | | | | | |

### Viscosity

Viscosities of components a) and b) were measured on a Brookfield Viscosimeter according to ISO 2555, set at a temperature of 25°C.

Further characterization of various properties of the putty compositions can be done for example by the following methods:

### Sag resistance

Sag resistance can be measured by a sag indicator on a horizontally placed test panel. The sag indicator has gaps of defined clearance suitable to measure the resistance of the coating evaluated. This method in an adaptation of ISO 16862. Another method to measure the sag resistance of a putty filler is applying a determined wet thick film in a set of panels (e.g. 2mmm to 7mm). Then the test panels are placed immediately in a vertical position after application. Then the film thickness at which there is no tendency to flow is determined as the maximum value of sag resistance.

### Bend test

A procedure in accordance with ISO 6860 or ISO 1519 can be followed. A wet film is applied to a sanded and degreased steel panel of 0.8 mm thickness and, after curing, the metal panel comprising the putty layer on the surface is bent around a cylindrical mandrel and the flexibility is assessed by observation of cracking.

### Impact

Impact can be tested according to ISO 6272-2, which specifies a method for evaluating the resistance of a dry film of paint, varnish or related product to cracking or peeling from a substrate when it is subjected to a deformation caused by a falling weight, dropped under standard conditions, acting on a small-area spherical indenter.

### Taber Abrasion

Taber Abrasion is tested according to ASTM D 4060. A 1 kg weight is applied onto the putty layer on a steel panel. A CS10 abrasive wheel was used and 2 x 500 revolutions used. The results are presented in terms of the loss of film in mg.

### Dry hard time

Dry hard time can be evaluated using the Beck Koller method in accordance with ISO 9117-4 which specifies a test for determining the times taken to reach various stages of drying of organic coatings, using a mechanical straight-line or circular drying-time recorder.

### Artificial Weathering

The resistance of the putties to UV degradation can be tested by artificial weathering according to ISO 16474-3, following the Test Cycle 1. Test Cycle No 1: 4 hours UV-light at 60°C with UVA-340 lamps (UVA-340, 0.83 W/m2 irradiation at 340 nm) followed by 4 hours condensation at 50°C for a total of 1000 to 3000 hours.

### Tensile strength

Tensile modulus and other aspects of the tensile stress/strain relationship can be measured according to ISO 527.

### Resistance to cracking (flexibility)

The resistance to cracking (of the cured putty layer) can be measured according to ASTM D 522, method B. Examine the bent surface of the specimen immediately with the unaided eye for cracking. This procedure can be applied as a "pass/fail" test by determining whether cracking is produced by a specified mandrel size.

## Claims

1. A putty composition comprising
a) a base composition comprising
i) one or more amino functional resin comprising one or more polyaspartic ester and/or one or more polyetheraspartic ester, and
ii) one or more hydroxy functional resin comprising one or more hydroxy functional polymer and/or one or more castor oil based polyol;
and
b) a curing agent comprising one or more polyisocyanates;
wherein
the one or more hydroxy functional resin ii) constitutes 1-10 parts (weight) relative to 1 part (weight) of the one or more amino functional resin i), such as 1-9 parts such as 1.5-9 parts such as 2-9 parts, or 1-8 parts such as 1.5-8 parts such as 2-8 parts, or 1-7 parts such as 1.5-7 parts such as 2-7 parts, or 1-6 parts such as 1.5-6 parts such as 2-6 parts, or 1-5 parts preferably 1.5-5 parts such as 2-5 parts, or 1-4 parts such as 1.5-4 parts such as 2-4 parts, or 1-3 parts such as 1.5-3 parts such as 2-3 parts (weight) relative to 1 part (weight) of the one or more amino functional resin i).

2. The putty composition according to any of claim 1, wherein said one or more hydroxy functional resin comprises one or more hydroxy functional polymer selected from hydroxy functional polyesters, hydroxy functional polycarbonates and hydroxy functional acrylic polymers.

3. The putty composition according to any of claims 1-2, wherein said one or more hydroxy functional resin comprises one or more castor oil based polyol.

4. The putty composition according to any of claims 1-3, wherein said one or more hydroxy functional resin have a hydroxyl number in the range of 800 to 50, preferably from 400 to 150 mg KOH/g, most preferably from 270 to 180 mg KOH/g determined in accordance with DIN EN ISO 15880.

5. The putty composition according to any of claims 1-4, wherein said one or more amino functional resin comprises one or more polyaspartic ester.

6. The putty composition according to claim 5, wherein said polyaspartic ester comprises the compound of formula (I) below 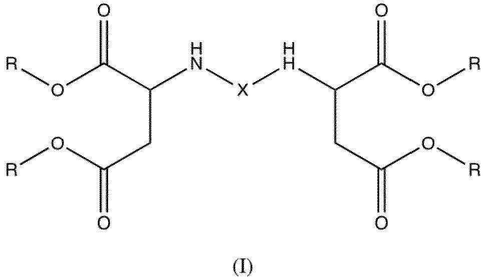 wherein each R represents a linear or branched C₁-C₁₀ alkyl residue, such as a linear or branched C₁-C₃ alky residue, preferably an ethyl residue; and X is a straight or branched divalent alkylene and/or cycloalkylene residue having 6 to 24 carbon atoms, such as 6 to 16 carbon atoms.

7. The putty composition according to any of claims 1-6, wherein said polyaspartic ester and/or polyetheraspartic ester have an amine number of 100 to 300 mg KOH/g, preferably between 190 to 250 mg KOH/g determined in accordance with DIN EN ISO 15880.

8. The putty composition according to any of claims 1-7, wherein said one or more polyisocyanates have an NCO content in the range of 10-25%, such as in the range of 15-25%, such as in the range of about 20-24% or 20-23% by weight, and an average functionality in the range of 2-4, such as in the range of 2-3.5 or in the range of 3-4 or 2-3.

9. The putty composition according to any of claims 1-8, wherein a) and b) are present in said putty composition in an amount so that the stoichiometric ratio of the number of isocyanate groups in the curing agent component to the number of amine and hydroxy groups in the base composition is in the range of 80: 100 to 160: 100, such as 90: 100 to 125: 100, such as 95: 100 to 120: 100, preferably in the range of 100: 100 to 120: 100, such as 100: 100 to 110: 100 or 105: 100 to 110: 100; such as about 100:100.

10. The putty composition according to any of claims 1-9, further comprising a catalyst.

11. The putty composition according to any of claims 1-10, further comprising hollow microspheres.

12. The putty composition according to claim 11, wherein said hollow microspheres are present in an amount in the range of 0.5 to 15 wt%, such as in the range of 5-15 wt%, such as in the range of 8 to 12 wt%, based on the total weight of the putty composition.

13. Use of a putty composition according to any of claims 1-12, for application on the outer surface of a substrate, such as a fiber-reinforced plastic substrate such as an epoxy resin-based plastic substrate; preferably on the outer surface of a wind blade.

14. A wind blade having on at least a part of the outer surface, a putty layer obtained from a putty composition according to any of claims 1-12.

15. A wind blade having on at least a part of the outer surface a multilayer system comprising
i) a cured putty layer obtained from a putty composition according to any of claims 1-12 applied on the outer surface of the substrate; and
ii) optionally a cured primer layer applied on the cured putty layer; and
iii) a cured topcoat; and
iv) optionally a cured leading edge protective coating layer;
wherein
iii) and iv) may optionally be applied in reverse order so that either said leading edge protective coating layer has been applied on top of the cured topcoat; or said topcoat layer has been applied on top of the cured leading edge protective coating layer.

## Patentansprüche

1. Kittzusammensetzung, umfassend
a) eine Grundzusammensetzung, umfassend
i) ein oder mehrere aminofunktionelle Harze, umfassend einen oder mehrere Polyasparaginester und/oder einen oder mehrere Polyetherasparaginester, und
ii) ein oder mehrere hydroxyfunktionelle Harze, umfassend ein oder mehrere hydroxyfunktionelle Polymere und/oder ein oder mehrere Polyole auf Rizinusölbasis;
und
b) ein Härtungsmittel, umfassend ein oder mehrere Polyisocyanate;
wobei
das eine oder mehrere hydroxyfunktionellen Harze ii) 1-10 Teile (Gewicht) relativ zu 1 Teil (Gewicht) des einen oder mehrerer aminofunktionellen Harze i), beispielsweise 1-9 Teile, beispielsweise 1,5-9 Teile, beispielsweise 2-9 Teile, oder 1-8 Teile, beispielsweise 1,5-8 Teile, beispielsweise 2-8 Teile, oder 1-7 Teile, beispielsweise 1,5-7 Teile, beispielsweise 2-7 Teile, oder 1-6 Teile, beispielsweise 1,5-6 Teile, beispielsweise 2-6 Teile, oder 1-5 Teile, bevorzugt 1,5-5 Teile, beispielsweise 2-5 Teile, oder 1-4 Teile, beispielsweise 1,5-4 Teile, beispielsweise 2-4 Teile, oder 1-3 Teile, beispielsweise 1,5-3 Teile, beispielsweise 2-3 Teile (Gewicht) relativ zu 1 Teil (Gewicht) des einen oder mehrerer aminofunktionellen Harze i) ausmachen.

2. Kittzusammensetzung nach Anspruch 1, wobei das eine oder die mehreren hydroxyfunktionellen Harze ein oder mehrere hydroxyfunktionelle Polymere, ausgewählt aus hydroxyfunktionellen Polyestern, hydroxyfunktionellen Polycarbonaten und hydroxyfunktionellen Acrylpolymeren umfasst.

3. Kittzusammensetzung nach einem der Ansprüche 1-2, wobei das eine oder mehrere hydroxyfunktionelle Harze ein oder mehrere Polyole auf Rizinusölbasis umfasst.

4. Kittzusammensetzung nach einem der Ansprüche 1-3, wobei das eine oder mehrere hydroxyfunktionelle Harze eine Hydroxylzahl im Bereich von 800 bis 50, bevorzugt von 400 bis 150 mg KOH/g, besonders bevorzugt von 270 bis 180 mg KOH/g, bestimmt nach DIN EN ISO 15880, aufweisen.

5. Kittzusammensetzung nach einem der Ansprüche 1-4, wobei das eine oder mehrere aminofunktionelle Harze ein oder mehrere Polyasparaginester umfasst.

6. Kittzusammensetzung nach Anspruch 5, wobei der Polyasparaginester die Verbindung der nachstehenden Formel (I) umfasst 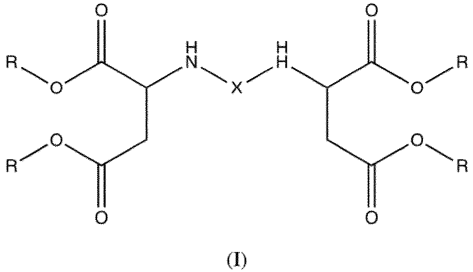 wobei jedes R einen linearen oder verzweigten C₁-C₁₀-Alkylrest darstellt, beispielsweise einen linearen oder verzweigten C₁-C₃-Alkylrest, bevorzugt einen Ethylrest; und X ein gerader oder verzweigter zweiwertiger Alkylen- und/oder Cycloalkylenrest mit 6 bis 24 Kohlenstoffatomen, beispielsweise 6 bis 16 Kohlenstoffatomen, ist.

7. Kittzusammensetzung nach einem der Ansprüche 1-6, wobei der Polyasparaginester und/oder Polyetherasparaginester eine Aminzahl von 100 bis 300 mg KOH/g aufweisen, bevorzugt zwischen 190 und 250 mg KOH/g, bestimmt nach DIN EN ISO 15880.

8. Kittzusammensetzung nach einem der Ansprüche 1-7, wobei das eine oder die mehreren Polyisocyanate einen NCO-Gehalt im Bereich von 10-25 %, beispielsweise im Bereich von 15-25 %, beispielsweise im Bereich von etwa 20-24 % oder 20-23 % Gewichtsanteil, und eine durchschnittliche Funktionalität im Bereich von 2-4, beispielsweise im Bereich von 2-3,5 oder im Bereich von 3-4 oder 2-3 aufweisen.

9. Kittzusammensetzung nach einem der Ansprüche 1-8, wobei a) und b) in der Kittzusammensetzung in einer Menge vorhanden sind, sodass das stöchiometrische Verhältnis der Anzahl der Isocyanatgruppen in dem Härtungsmittel zur Anzahl der Amin- und Hydroxygruppen in der Grundzusammensetzung im Bereich von 80:100 bis 160:100, beispielsweise 90:100 bis 125:100, beispielsweise 95:100 bis 120:100, bevorzugt im Bereich von 100:100 bis 120:100, beispielsweise 100:100 bis 110:100 oder 105:100 bis 110:100; beispielsweise 100:100 liegt.

10. Kittzusammensetzung nach einem der Ansprüche 1-9, weiter einen Katalysator umfassend:

11. Kittzusammensetzung nach einem der Ansprüche 1-10, weiter Mikrohohlkugeln umfassend.

12. Kittzusammensetzung nach Anspruch 11, wobei die Mikrohohlkugeln in einer Menge im Bereich von 0,5 bis 15 Gew.-%, beispielsweise im Bereich von 5-15 Gew.-%, beispielsweise im Bereich von 8 bis 12 Gew.-%, bezogen auf das Gesamtgewicht der Kittzusammensetzung, vorhanden sind.

13. Verwendung einer Kittzusammensetzung nach einem der Ansprüche 1-12 zum Auftragen auf die Außenfläche eines Substrats, beispielsweise eines faserverstärkten Kunststoffsubstrats, beispielsweise eines Kunststoffsubstrats auf Epoxidharzbasis; bevorzugt auf die Außenfläche eines Windflügels.

14. Windflügel, welcher auf zumindest einem Teil der Außenfläche eine Kittschicht aufweist, welche aus einer Kittzusammensetzung nach einem der Ansprüche 1-12 erhalten wird.

15. Windflügel, welcher auf zumindest einem Teil der Außenfläche ein Mehrschichtsystem aufweist, umfassend
i) eine ausgehärtete Kittschicht, welche aus einer Kittzusammensetzung nach einem der Ansprüche 1-12 erhalten und auf die Außenfläche des Substrats aufgetragen wird; und
ii) optional eine ausgehärtete Grundierungsschicht, welche auf die ausgehärtete Kittschicht aufgetragen wird; und
iii) eine ausgehärtete Deckschicht; und
iv) optional eine ausgehärtete Schutzbeschichtungsschicht für die Vorderkante;
wobei
iii) und iv) optional in umgekehrter Reihenfolge aufgetragen werden können, sodass entweder die Schutzbeschichtungsschicht für die Vorderkante auf die ausgehärtete Deckschicht aufgetragen wird oder die Deckschicht auf die ausgehärtete Schutzbeschichtungsschicht für die Vorderkante aufgetragen wird.

## Revendications

1. Composition de mastic comprenant
a) une composition de base comprenant
i) une ou plusieurs résines fonctionnelles amino comprenant un ou plusieurs esters polyaspartiques et/ou un ou plusieurs esters polyétheraspartiques, et
ii) une ou plusieurs résines fonctionnelles hydroxy comprenant un ou plusieurs polymères fonctionnels hydroxy et/ou un ou plusieurs polyols à base d'huile de ricin ; et
b) un agent de durcissement comprenant un ou plusieurs polyisocyanates ; dans laquelle
les une ou plusieurs résines fonctionnelles hydroxy ii) constituent 1-10 parties (en poids) par rapport à 1 partie (en poids) des une ou plusieurs résines fonctionnelles amino i), telles que 1-9 parties, telles que 1,5-9 parties, telles que 2-9 parties, ou 1-8 parties, telles que 1,5-8 parties, telles que 2-8 parties, ou 1-7 parties, telles que 1,5-7 parties, telles que 2-7 parties, ou 1-6 parties, telles que 1,5-6 parties, telles que 2-6 parties, ou 1-5 parties, de préférence 1,5-5 parties, telles que 2-5 parties, ou 1-4 parties, telles que 1,5-4 parties telles que 2-4 parties, ou 1-3 parties, telles que 1,5-3 parties, telles que 2-3 parties (en poids) par rapport à 1 partie (en poids) des une ou plusieurs résines fonctionnelles amino i).

2. Composition de mastic selon l'une quelconque de la revendication 1, dans laquelle lesdites une ou plusieurs résines fonctionnelles hydroxy comprennent un ou plusieurs polymères fonctionnels hydroxy choisis parmi des polyesters fonctionnels hydroxy, des polycarbonates fonctionnels hydroxy et des polymères acryliques fonctionnels hydroxy.

3. Composition de mastic selon l'une quelconque des revendications 1-2, dans laquelle lesdites une ou plusieurs résines fonctionnelles hydroxy comprennent un ou plusieurs polyols à base d'huile de ricin.

4. Composition de mastic selon l'une quelconque des revendications 1-3, dans laquelle lesdites une ou plusieurs résines fonctionnelles hydroxy présentent un indice d'hydroxyle dans la plage de 800 à 50, de préférence de 400 à 150 mg KOH/g, le plus préférentiellement de 270 à 180 mg KOH/g déterminé selon la norme DIN EN ISO 15880.

5. Composition de mastic selon l'une quelconque des revendications 1-4, dans laquelle lesdites une ou plusieurs résines fonctionnelles amino comprennent un ou plusieurs esters polyaspartiques.

6. Composition de mastic selon la revendication 5, dans laquelle ledit ester polyaspartique comprend le composé de formule (I) ci-dessous 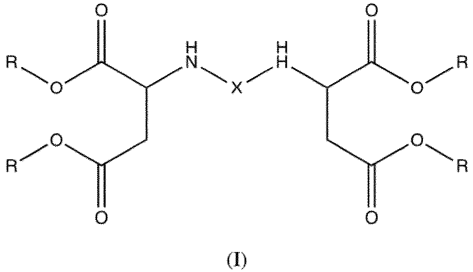 dans laquelle chaque R représente un résidu alkyle linéaire ou ramifié en C₁-C₁₀, tel qu'un résidu alkyle linéaire ou ramifié en C₁-C₃, de préférence un résidu éthyle ; et X est un résidu alkylène et/ou cycloalkylène divalent linéaire ou ramifié présentant 6 à 24 atomes de carbone, tel que 6 à 16 atomes de carbone.

7. Composition de mastic selon l'une quelconque des revendications 1-6, dans laquelle ledit ester polyaspartique et/ou ledit ester polyétheraspartique présente un indice d'amine de 100 à 300 mg KOH/g, de préférence entre 190 et 250 mg KOH/g déterminé selon la norme DIN EN ISO 15880.

8. Composition de mastic selon l'une quelconque des revendications 1-7, dans laquelle lesdits un ou plusieurs polyisocyanates présentent une teneur en NCO dans la plage de 10-25 %, telle que dans la plage de 15-25 %, telle que dans la plage d'environ 20-24 % ou 20-23 % en poids, et une fonctionnalité moyenne dans la plage de 2-4, telle que dans la plage de 2-3,5 ou dans la plage de 3-4 ou 2-3.

9. Composition de mastic selon l'une quelconque des revendications 1-8, dans laquelle a) et b) sont présents dans ladite composition de mastic en une quantité telle que le rapport stœchiométrique entre le nombre de groupes isocyanate dans le composant d'agent de durcissement et le nombre de groupes amine et hydroxy dans la composition de base est dans la plage de 80:100 à 160:100, tel que 90:100 à 125:100, tel que 95:100 à 120:100, de préférence dans la plage de 100:100 à 120:100, tel que 100:100 à 110:100 ou 105:100 à 110:100 ; tel qu'environ 100:100.

10. Composition de mastic selon l'une quelconque des revendications 1-9, comprenant en outre un catalyseur.

11. Composition de mastic selon l'une quelconque des revendications 1-10, comprenant en outre des microsphères creuses.

12. Composition de mastic selon la revendication 11, dans laquelle lesdites microsphères creuses sont présentes en une quantité dans la plage de 0,5 à 15 % en poids, telle que dans la plage de 5-15 % en poids, telle que dans la plage de 8 à 12 % en poids, sur la base du poids total de la composition de mastic.

13. Utilisation d'une composition de mastic selon l'une quelconque des revendications 1-12, pour une application sur la surface externe d'un substrat, tel qu'un substrat en plastique renforcé de fibres tel qu'un substrat en plastique à base de résine époxy ; de préférence sur la surface externe d'une pale d'éolienne.

14. Pale d'éolienne présentant, sur au moins une partie de la surface externe, une couche de mastic obtenue à partir d'une composition de mastic selon l'une quelconque des revendications 1-12.

15. Pale d'éolienne présentant, sur au moins une partie de la surface externe, un système multicouche comprenant
i) une couche de mastic durcie obtenue à partir d'une composition de mastic selon l'une quelconque des revendications 1-12 appliquée sur la surface externe du substrat ; et
ii) facultativement, une couche d'apprêt durcie appliquée sur la couche de mastic durcie ; et
iii) une couche de finition durcie ; et
iv) facultativement une couche de revêtement protecteur de bord d'attaque durcie ; dans laquelle
iii) et iv) peuvent facultativement être appliquérs dans l'ordre inverse de telle sorte que soit ladite couche de revêtement protecteur de bord d'attaque ait été appliquée sur la couche de finition durcie ; soit ladite couche de finition ait été appliquée sur la couche de revêtement protecteur de bord d'attaque durcie.
